# EUROPEAN PATENT APPLICATION

(11) **EP 4 572 288 A1**
(43) Date of publication of application: **18.06.2025**
(21) Application number: 23864772.1
(22) Date of filing: 14.09.2023
(51) Int. Cl.: H04L 47/125

(54) **LOAD BALANCING PROCESSING METHOD AND APPARATUS, STORAGE MEDIUM AND ELECTRONIC APPARATUS**

(30) Priority: 16.09.2022 CN 202211131470
(71) Applicant: ZTE CORPORATION, Shenzhen, Guangdong 518057 (CN)
(72) Inventor: NI, Jinquan, Shenzhen, Guangdong 518057 (CN); LIU, Xuesheng, Shenzhen, Guangdong 518057 (CN); XU, Daigang, Shenzhen, Guangdong 518057 (CN); MENG, Zhaoxing, Shenzhen, Guangdong 518057 (CN)
(74) Representative: Chimini, Francesco
(86) International application number: PCT/CN2023/118931
(87) International publication number: WO 2024/056042

(57) **Abstract**

The embodiments of the present disclosure provide a load balancing processing method and apparatus, a storage medium and an electronic device. The method includes: receiving a service request from a service consumer; acquiring performance statistics information of an application programming interface (API) gateway, and determining, according to the performance statistics information, whether the API gateway satisfies a loading condition of a reconfigured load balancing policy; and determining a target service provider instance according to pre-stored application performance management (APM) full information and the reconfigured load balancing policy in cases where the API gateway satisfies the loading condition, the target service provider instance being used for processing the service request.

## Description

### Cross-Reference to Related Application

The present disclosure claims the priority of Chinese Patent Application 202211131470.2, filed on 16 September 2022 and entitled "Load Balancing Processing Method and Apparatus, Storage Medium and Electronic Device", the disclosure of which is incorporated herein by reference in its entirety.

### Technical Field

The embodiments of the present disclosure relate to the field of distributed systems, and in particular, to a load balancing processing method and apparatus, a storage medium, and an electronic device.

### Background

In order to solve the pain point of traditional monolithic applications, microservices have become an important definition of the cloud native. In addition, more and more companies in the industry adopt a microservice architecture, such as Amazon, eBay and NetFlix, and the scale of the microservices has also grown exponentially. According to relevant industry trend reports, microservices have entered a mature stage and are widely adopted as a mainstream architecture. Microservice architecture and the scale growth thereof also bring a series of challenges, for example, the access communication between a client and a microservice application needs to meet growing management requirements. As the preferred Application Programming Interface (API) gateway, it can transfer functionality from individual microservices to the gateway, thereby simplifying the implementation of each microservice by integrating cross-domain issues into a single layer.

Generally, the API gateway provides several functions such as load balancing, authentication and authorization, rate limiting, logging and tracking. Load balancing is a very critical part of the high-availability design of distributed systems. One of the characteristics of distributed systems is to support rapid expansion. After the cluster is expanded, how to dispatch network requests to one or more nodes in the cluster depends on the load balancing policy. Load balancing is very critical in handling high concurrency, easing network pressure, and supporting capacity expansion. Different load balancing policies can be selected in different application scenarios.

There are two main types of traditional API gateway load balancing policies: one type of policies are a polling policy, a weighted polling, a random policy, and a hash policy; the other type of policies are a minimum response time policy and a minimum concurrency number policy; the first four fall within independent algorithms, and they do not depend on the actual state and real processing situation of the back-end service instance, and the latter two need to decide the final policy implementation on the basis of the real processing situation of the back-end service instance, but the data relied on here is collected by the API gateway itself, and the statistics are actually obtained after the back-end service instance has completed the request response.

The configured load balancing policies of the above API gateways are still widely used today, which can allow requests to be processed more efficiently and evenly. However, with the scale explosion of cloud native projects, there have been some new changes in users and technical architecture, which have put forward higher requirements for load balancing functions. It can be seen therefrom that the traditional solution has some technical disadvantages:
The algorithms of the first type of policies are theoretical and cannot adapt to the complexity and dynamics of the microservice architecture. For example, traditional load balancing policies such as polling and weighting assume that the processing performance of each node is unchanged. However, this premise is actually difficult to be established in scenarios where the expansion and contraction capacity occurs at any time and resources used by microservices are changed and contradicted, so that these "policies" cannot realize "balancing" in a real sense.

The second type of policies only decides the load balancing policy according to the information of the API gateway itself. This technical solution has disadvantages such as post-event adjustment and insufficient timeliness. For example, although some common policies for selecting load nodes on the basis of a response time and a response code relatively accurate, the policies have disadvantages such as post-event adjustment, insufficient timeliness, and single dimension.

In related technologies, there is no solution to the problem that the traditional API gateway load balancing policies only rely on the API gateway itself to collect data, which is inflexible and timely.

### Summary

The embodiments of the present disclosure provide a load balancing processing method and apparatus, a storage medium, and an electronic device, so as to at least solve the problem in the related art that the traditional API gateway load balancing policies only rely on the API gateway itself to collect data, which is inflexible and timely.

According to one embodiment of the present disclosure, a load balancing processing method is provided. The method includes:
receiving a service request from a service consumer;
acquiring performance statistics information of an application programming interface (API) gateway, and determining, according to the performance statistics information, whether the API gateway satisfies a loading condition of a reconfigured load balancing policy;
determining a target service provider instance according to pre-stored application performance management (APM) full information and the reconfigured load balancing policy in cases where the API gateway satisfies the loading condition, the target service provider instance being used for processing the service request; and
determining the target service provider instance according to a configured load balancing policy in cases where the API gateway does not satisfy the loading condition.

According to another embodiment of the present disclosure, a load balancing processing apparatus is provided. The apparatus includes:
a receiving module, configured to receive a service request from a service consumer;
a determination module, configured to acquire performance statistics information of an application programming interface (API) gateway, and determine, according to the performance statistics information, whether the API gateway satisfies a load condition of a reconfigured load balancing policy;
a first load balancing module, configured to determine a target service provider instance according to pre-stored application performance management (APM) full information and the reconfigured load balancing policy in cases where the API gateway satisfies the loading condition, the target service provider instance being used for processing the service request; and
a second load balancing module, configured to determine the target service provider instance according to a configured load balancing policy in cases where the API gateway does not satisfy the loading condition.

According to another embodiment of the present disclosure, a load balancing processing system is also provided. The system includes:
an API gateway, configured to receive a service request from a service consumer, acquire performance statistics information of an application programming interface (API) gateway, and determine, according to the performance statistics information, whether the API gateway satisfies a load condition of a reconfigured load balancing policy;
an intelligent load balancer, configured to determine a target service provider instance according to pre-stored application performance management (APM) full information and the reconfigured load balancing policy in cases where the API gateway satisfies the loading condition, the target service provider instance being used for processing the service request; and
the API gateway, further configured to determine the target service provider instance according to a configured load balancing policy in cases where the API gateway does not satisfy the loading condition.

According to another embodiment of the present disclosure, a computer readable storage medium is further provided, the storage medium stores a computer program, wherein the computer program is configured to execute, when being run by the processor, the operations in any one of the described method embodiments.

According to yet another embodiment of the present disclosure, further provided is an electronic device, comprising a memory and a processor; the memory stores a computer program, and the processor is configured to run the computer program so as to execute the operations in any one of the described method embodiments.

### Brief Description of the Drawings

Fig. 1 is a hardware structure block diagram of a load balancing processing method according to an embodiment of the present disclosure;
Fig. 2 is a flowchart of a load balancing processing method according to an embodiment of the present disclosure;
Fig. 3 is a structural block diagram of a load balancing processing system according to another embodiment of the present disclosure;
Fig. 4 is a flowchart of a load balancing processing method according to another embodiment of the present disclosure;
Fig. 5 is a flowchart of a load balancing processing method according to node IO in an embodiment of the present disclosure;
Fig. 6 is a flowchart of a load balancing processing method according to another embodiment of the present disclosure;
Fig. 7 is a block diagram of a load balancing processing apparatus according to an embodiment of the present disclosure;
Fig. 8 is a structural block diagram of performing load balancing independently by an API gateway according to an embodiment of the present disclosure;
Fig. 9 is a structural block diagram of performing load balancing by an API gateway and an intelligent load balancer together according to an embodiment of the present disclosure;
Fig. 10 is a schematic diagram of a gateway control plane UI according to an embodiment of the present disclosure.

### Detailed Description of the Embodiments

The embodiments of the present disclosure are described in detail with reference to the accompanying drawings and in conjunction with the embodiments.

It should be noted that the terms "first", "second" etc. in the description, claims, and accompanying drawings of the present disclosure are used to distinguish similar objects, and are not necessarily used to describe a specific sequence or order.

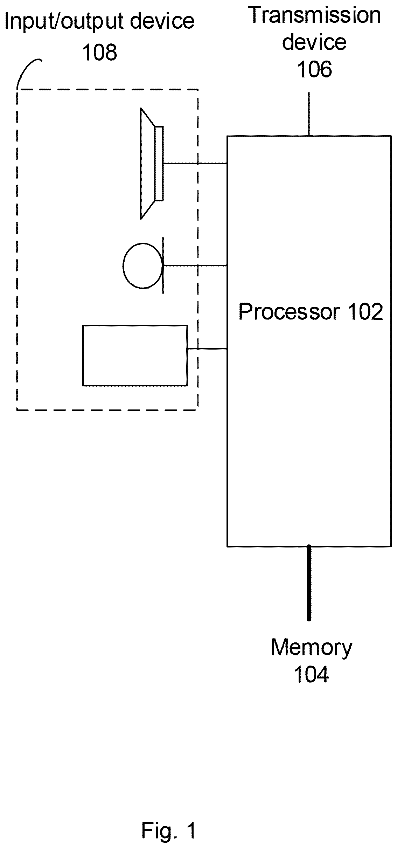

Method embodiments provided in the embodiments of the present disclosure may be executed in a mobile terminal, a computer terminal, a cloud server, or similar computing apparatuses. By taking running on a computer terminal as an example, Fig. 1 is a hardware structure block diagram of a load balancing processing method according to an embodiment of the present disclosure, as shown in Fig. 1, the hardware board may include one or more (only one is shown in Fig. 1) processors 102 (the processors 102 may include, but are not limited to, a microprocessor MCU or a processing device such as a programmable logic device FPGA) and a memory 104 configured to store data, wherein the mobile terminal can further include a transmission device 106 for a communication function and an input/output device 108. Those ordinarily skilled in the art can appreciate that the structure shown in Fig. 1 is for illustrative purposes only, but not limit the structure of the mobile terminal. For example, the mobile terminal may also include more or fewer components than that shown in Fig. 1, or have a different configuration than that shown in Fig. 1.

The memory 104 may be configured to store a computer program, for example, a software program and a module of application software, such as a computer program corresponding to the load balancing processing method in the embodiments of the present disclosure. The processor 102 runs the computer program stored in the memory 104, so as to execute various function applications and load balancing processing, that is, to implement the foregoing method. The memory 104 may include a high-speed random access memory, and may also include a non-transitory memory, such as one or more magnetic storage apparatuses, flash memories, or other non-transitory solid-state memories. In some instances, the memory 104 may further include memories remotely arranged with respect to the processor 102, and these remote memories may be connected to the mobile terminal over a network. Examples of the described network include, but are not limited to the Internet, an intranet, a local area network, a mobile communication network, and a combination thereof.

The transmission device 106 is configured to receive or transmit data by a network. Specific examples of the described network may include a wireless network provided by a communication provider. In one example, the transmission device 106 includes a network interface controller (NIC) which may be connected to other network devices by means of a base station, thereby being able to communicate with the Internet. In one example, the transmission device 106 may be a radio frequency (RF) module for communicating wirelessly with the Internet.

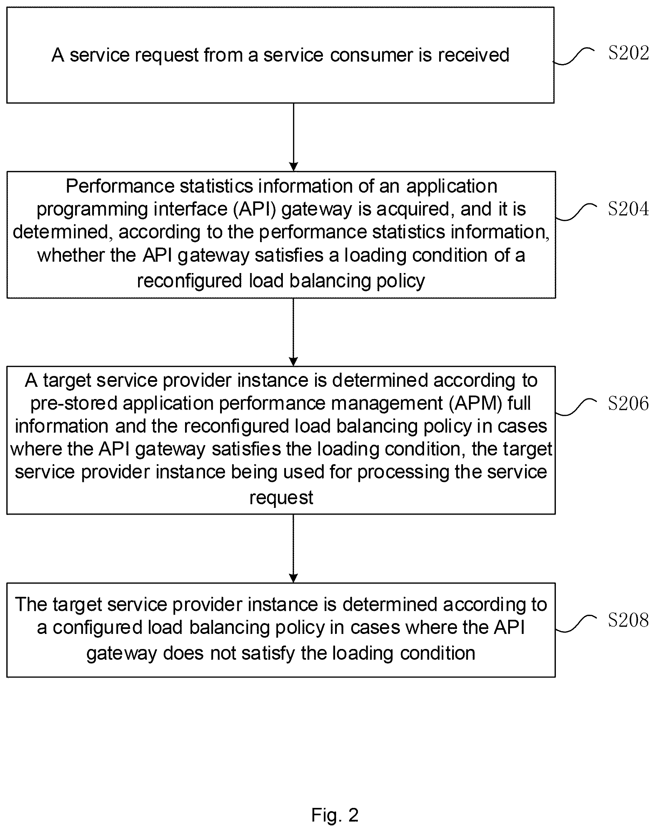

The present embodiment provides a load balancing processing method. Fig. 2 is a flowchart of a load balancing processing method according to an embodiment of the present disclosure. As shown in Fig. 2, the method includes the following steps:
step S202: a service request from a service consumer is received;
step S204: performance statistics information of an application programming interface (API) gateway is acquired, and it is determined, according to the performance statistics information, whether the API gateway satisfies a loading condition of a reconfigured load balancing policy;
step S206: a target service provider instance is determined according to pre-stored application performance management (APM) full information and the reconfigured load balancing policy in cases where the API gateway satisfies the loading condition, the target service provider instance being used for processing the service request; and
step S208: the target service provider instance is determined according to a configured load balancing policy in cases where the API gateway does not satisfy the loading condition.

In the present embodiment, the service consumer in step S202 is a service request initiator, which generally refers to an application client.

In the present embodiment, step S204 may specifically comprise: determining whether the performance statistics information is less than a preset performance statistics information threshold, wherein the performance statistics information comprises at least one of the following: a gateway forwarding error rate, a gateway CPU occupancy rate and a gateway memory occupancy rate; in cases where the performance statistics information is less than the performance statistics information threshold, determining that the API gateway satisfies the loading condition; and in cases where the performance statistics information is greater than or equal to the performance statistics information threshold, determining that the API gateway does not satisfy the loading condition.

Specifically, the API gateway may be configured in advance by means of a gateway control plane UI, for example, a loading condition is set as a CPU occupancy rate of a central processing unit (CPU) being less than 70%, and while preferentially ensuring the performance of the API gateway, a reconfigured load balancing policy is loaded. If the reconfigured load balancing policy is forcibly loaded in the case of insufficient API gateway resources, the overall performance may be reduced, for example, the request response time is long.

In the present embodiment, the reconfigured load balancing policy in step S204 is an abstract load balancing policy and an expected behavior of the system, and used to express the user's expectations for the load balancing processing results. Specifically, the reconfigured load balancing policy is set according to operation information collected and counted by an application performance management (APM) system, and the dimensions of the operation information comprise an event, a performance, an index, and a call chain. The reconfigured load balancing policy may be configured according to any operation information collected by the APM system, for example, the user pays more attention to the service response speed, and load balancing may be performed in consideration of the node bandwidth and the service response delay.

Further, the reconfigured load balancing policy includes, but is not limited to, the following policies:
performing load balancing according to the number of application restarts of the service provider instance;
performing load balancing according to an application restart duration of the service provider instance;
performing load balancing according to the number of applications for restart of a node where the service provider instance is located;
performing load balancing according to the input and output (IO) of a node where the service provider instance is located;
performing load balancing according to the real-time bandwidth of the service provider instance;
performing load balancing according to a historical error rate of the service provider instance;
performing load balancing according to the service index capability of the service provider instance;
performing load balancing according to a processing duration of a single request of a service provider instance;
performing load balancing according to processing success rates of a plurality of requests of the service provider instance;
performing load balancing according to a CPU occupancy rate of a central processing unit of the service provider instance; and
performing load balancing according to a response time of the service provider instance.

In the present embodiment, the reconfigured load balancing policy can be set to different policy levels. When an upper-level policy is selected in the User Interface (UI), the corresponding lower-level policy will be automatically displayed for the user to select. For example, if the load balancing is performed according to the dynamic processing capability of the service provider instance, an option for measuring the processing capability of the service provider instance, such as a processing duration of a single request (dynamic processing capability), a processing success rate of a plurality of requests, and the number of application restarts of the service provider instance, may pop up.

In the present embodiment, step S206 may specifically include the following steps:
step S2062: one or more service providers are determined according to the service request, wherein each service provider is configured with at least one service provider instance;
step S2064: target service operation information corresponding to the reconfigured load balancing policy and the service provider is filtered out from the APM full information;
step S2066: a service provider instance pool is generated according to the reconfigured load balancing policy and the target service operation information; and
step S2068: the target service provider instance is determined from the service provider instance pool according to the configured load balancing policy.

In the present embodiment, the service provider in step S2062 is a service requester, and generally refers to an application server. Under the application of a microservice architecture, each service provider may have a plurality of copies, i.e., service provider instances, having a service processing capability.

In the present embodiment, step S2066 may specifically include:
in cases where one reconfigured load balancing policy is preset, screening, according to the target service operation information, all service provider instances that satisfy the reconfigured load balancing policy to form the service provider instance pool; and
in cases where a plurality of reconfigured load balancing policies are preset, respectively screening, according to the target service operation information, all service provider instances satisfying each reconfigured load balancing policy to form a service provider sub-instance pool; and processing a plurality of service provider sub-instance pools according to a preset combination relationship to obtain the service provider instance pool, wherein the combination relationship comprises one of the following: AND, OR and NOT.

Specifically, if the combination relationship is AND, it indicates that the service provider instance needs to satisfy multiple reconfigured load balancing at the same time; if the combination relationship is OR, it indicates that the service provider instance only needs to satisfy any one reconfigured load balancing; and if the combination relationship is NOT, it indicates that service provider instances that satisfy any of the reconfigured load balancing need to be removed.

Further, when a reconfigured load balancing policy is preset, the policy relationship may also be set to be NOT or regular, NOT means that all service provider instances satisfying the reconfigured load balancing policy are removed, and regular means a string matching pattern, as long as the target service operation information contains the specific parameters set in the reconfigured load balancing policy, the load balancing policy is considered to be satisfied.

In the present embodiment, during the entire running process of the load balancing processing method, the method further comprises acquiring and storing the APM full information from an APM system by means of an interface complying with a preset specification, wherein the APM full information comprises operation information of all service provider instances collected and counted by the APM system, and the preset specification is the OpenTelemetry specification.

Specifically, the connection to the APM system is usually implemented by standard protocols such as a Hyper Text Transfer Protocol (HTTP) or a Transmission Control Protocol (TCP); and according to an actual application scenario, different manners such as periodic acquisition, dynamic monitoring of changes, and publishing/subscription can be selected to read the APM full information from the APM system, wherein the acquired APM full information is stored in a database and waits to be called in step S206.

In the present embodiment, step S208 may specifically include the following steps:
step S2082: one or more service providers are determined according to the service request, wherein each service provider is configured with at least one service provider instance;
step S2084: service operation information that is collected by the API gateway and corresponds to the service provider instance is acquired; and
step S2086: the target service provider instance is determined according to the service operation information and the configured load balancing policy, wherein the configured load balancing policy comprises a polling policy, a weighted polling policy, a random policy, a hash policy, a minimum response time policy and a minimum concurrent number policy.

In the present embodiment, the configured load balancing policy is a traditional load balancing policy, and specifically, the polling policy allocates each request to different service provider instances one by one in a time sequence; the weighted polling policy performs allocation according to a set weight, the weight being directly proportional to the service request access rate; the hash policy allocates each request according to a hash result of accessing an ip, wherein service requests from the same ip will be allocated to a fixed service provider instance; and the minimum response time policy preferentially performs allocation to a service provider instance having the shortest response time.

In the embodiment, by means of steps S202 to S208, it can solve the problem in the related art that the traditional API gateway load balancing policies only rely on the API gateway itself to collect data, which is inflexible and timely. By determining whether the API gateway satisfies the loading condition of the reconfigured load balancing policy, the performance of the API gateway is guaranteed first, and the data dimensions available to the API gateway are enriched by means of the APM system, thereby providing more load balancing policies that meet the actual running condition of the service.

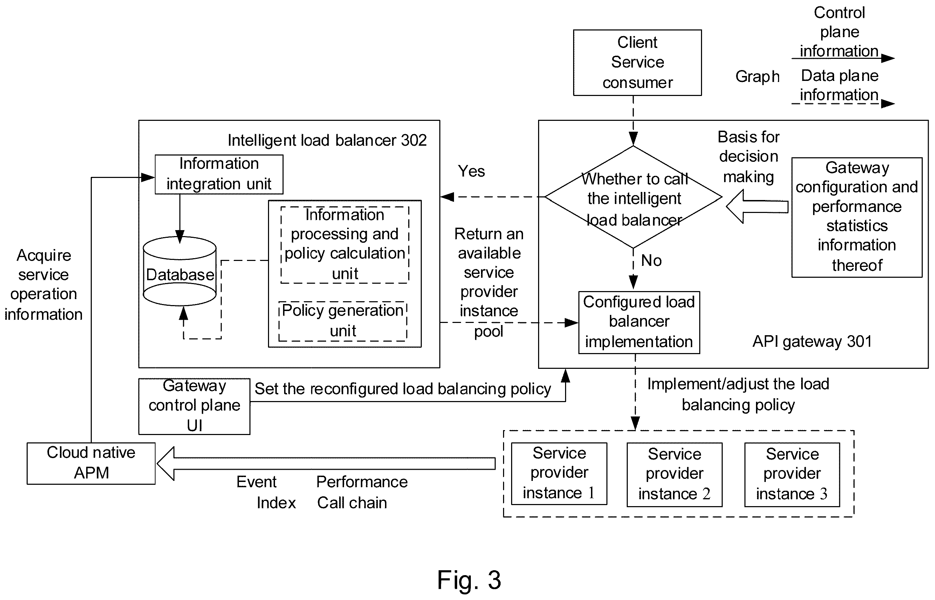

Fig. 3 is a structural block diagram of a load balancing processing system according to another embodiment of the present disclosure. As shown in Fig. 3, the load balancing processing system comprises the following structure:
an API gateway 301, configured to receive a service request from a service consumer, acquire performance statistics information of an application programming interface (API) gateway, and determine, according to the performance statistics information, whether the API gateway satisfies a load condition of a reconfigured load balancing policy;
an intelligent load balancer 302, configured to determine a target service provider instance according to pre-stored application performance management (APM) full information and the reconfigured load balancing policy in cases where the API gateway satisfies the loading condition, the target service provider instance being used for processing the service request; and
the API gateway 301, further configured to determine the target service provider instance according to a configured load balancing policy in cases where the API gateway does not satisfy the loading condition.

In the present embodiment, the loading condition of the reconfigured load balancing policy is the calling condition of the intelligent load balancer 302, and the intelligent load balancer 302 is connected to the API gateway 301 by means of pluggable coupling.

In the present embodiment, the load balancing processing system further comprises a gateway control plane UI configured to receive an expected abstract load balancing policy/behavior set by a user, and provide same to the whole system. For example, various load balancing policies, such as performing load balancing according to the number of application restarts, performing load balancing according to an application restart duration; performing load balancing according to a CPU occupancy rate of a central processing unit; performing load balancing according to the service index; and performing load balancing according to the dynamic processing capability of the service instance, can be set for different services by means of the gateway control plane UI.

Further, the gateway control plane UI may add reconfigured load balancing policies on the basis of the configured load balancing policies (polling, weight, hash and random). After each load balancing policy is selected, a sub-menu pops up, and relevant index values are set in the sub-menu. For example, a specific bit/s may be set in a sub-menu in which the load balancing is performed according to the node bandwidth; a service-defined service index item may be filled in a sub-menu in which the load balancing is performed according to the service index capability of the service provider instance; when the relevant index of the node of a certain service provider instance or the service itself is lower than a set threshold, the service instance will then be removed from an available load balancing service instance pool.

The gateway control plane UI is further configured to set a policy relationship (NOT, regular) and a combination relationship (AND, OR, NOT) of the reconfigured load balancing policy.

In the present embodiment, the intelligent load balancer 302 further includes:
an information integration unit, configured to acquire service operation information from a cloud native APM;
a database, configured to store the operation information acquired by the information integration unit;
an information processing and policy calculation unit, configured to filter out target service operation information from the database according to the reconfigured load balancing policy; and
a policy generation unit, configured to determine a service provider instance pool according to the target service operation information.

In the present embodiment, the information integration unit is a proxy component that collects the operation information such as distributed call chain data from the APM system by means of a standard protocol. The information collected by the APM system includes an event, a performance, an index, a call chain and other dimensions, such as CPU, IO and memory occupation information, as well as information (a processing duration, an error rate, and the number of restarts) that can reflect the reflect service processing capability.

In the present embodiment, the information processing and policy calculating unit may be further specifically configured to filter out, from the APM full information, target service operation information corresponding to the reconfigured load balancing policy and the service provider.

In the present embodiment, the policy generation unit may specifically be further configured to screen, in cases where one reconfigured load balancing policy is preset and according to the target service operation information, all service provider instances that satisfy the reconfigured load balancing policy to form the service provider instance pool; respectively screen, in cases where a plurality of reconfigured load balancing policies are preset and according to the target service operation information, all service provider instances satisfying each reconfigured load balancing policy to form a service provider sub-instance pool; and process a plurality of service provider sub-instance pools according to a preset combination relationship to obtain the service provider instance pool, wherein the combination relationship comprises one of the following: AND, OR and NOT.

In the present embodiment, the API gateway 301 is further configured to determine the target service provider instance according to the configured load balancing policy in cases where a plurality of service provider instances are contained in the service provider instance pool.

In the present embodiment, the API gateway 301 is further configured to forward the service request to the target service provider instance after determining the target service provider instance; and return a service request response to the service consumer after the target service provider instance responds to the service request.

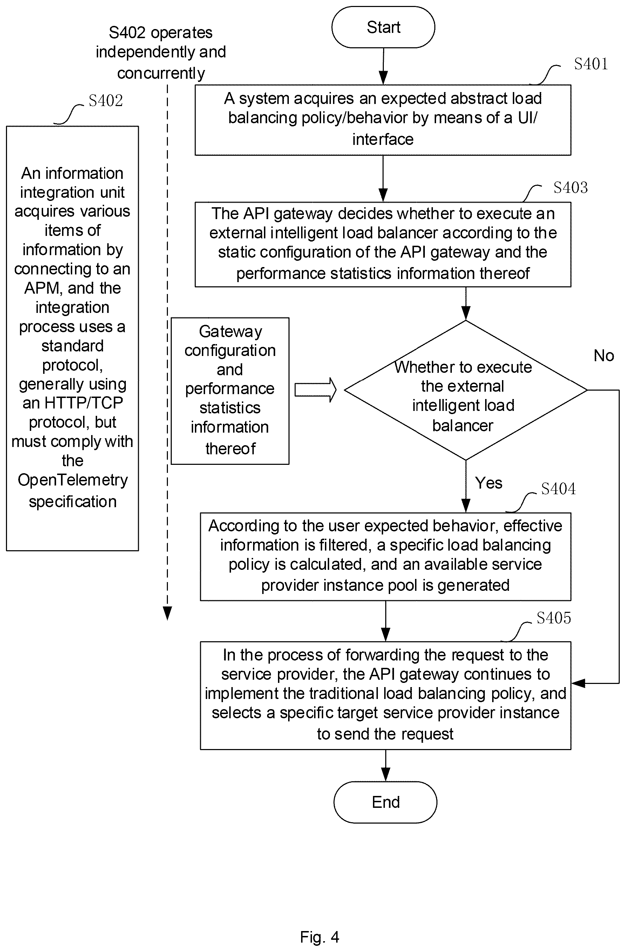

Fig. 4 is a flowchart of a load balancing processing method according to another embodiment of the present disclosure, applied to the described load balancing processing system. As shown in Fig. 4, the load balancing processing method specifically comprises the following steps:
step S401: a system acquires an expected abstract load balancing policy/behavior by means of a Ul/interface;
step S402: an information integration unit acquires various items of information by connecting to an APM, and the integration process uses a standard protocol, generally using an HTTP/TCP protocol, but must comply with the OpenTelemetry specification;
step S403: the API gateway decides whether to execute an external intelligent load balancer according to the static configuration of the API gateway and the performance statistics information thereof;
step S404: according to the user expected behavior (the reconfigured load balancing policy), effective information is filtered, a specific load balancing policy is calculated, and an available service provider instance pool is generated; and
step S405: in the process of forwarding the request to the service provider, the API gateway continues to implement the traditional load balancing policy (the configured load balancing policy), and selects a specific target service provider instance to send the request.

In step S401 of the present embodiment, the gateway control plane UI provides an option of setting different abstract load balancing policies for different services, for example, various load balancing policies, such as performing load balancing according to a CPU occupancy rate of a service provider instance; performing load balancing according to the input and output (IO) of a node where the service provider instance is located; performing load balancing according to the service index; and performing load balancing according to the dynamic processing capability of the service instance. When the policy option of "performing load balancing according to the dynamic processing capability of the service instance" is selected, the system control panel UI will pop up an option for measuring the processing capability of the service instance, such as a processing duration of a single request (dynamic processing capability), a processing success rate of a plurality of requests, and the number of application restarts of the service provider instance; and by means of further selection, the actual behavior expectation of the system can be clearly described.

In step S402 of the present embodiment, as the APM system has a unified OpenTelemetry specification, the integration may be implemented according to a standard; and furthermore, since APM has completed the interaction and data collection of all applications, the intelligent load balancer can thus decouple from the real state of the application itself, without the need of interacting with large-scale applications one by one and counting the running data thereof, which greatly reduces the implementation load of the intelligent load balancer, and greatly improving the robustness.

In the present embodiment, step S403 may specifically comprise: after an actual service request arrives at the API gateway, the API gateway first collects resource occupation conditions of the gateway itself, comprising a gateway forwarding error rate, a gateway CPU memory occupancy rate, and a gateway memory occupancy rate; and determines whether a current gateway resource occupation condition can support continuing to call an intelligent load balancer to implement an enhanced load balancing policy.

Specifically, the calling condition can be configured for the API gateway by means of the gateway control plane UI (for example, set the CPU occupancy rate to be less than a threshold of 70%), and if it is determined that the resources of the API gateway are insufficient (i.e. the CPU occupancy rate is greater than or equal to 70%), the intelligent load balancer is skipped, and the process directly jumps to step S405, and a traditional and simple load balancing policy built in the API gateway is used for forwarding. Otherwise, the process proceeds to step S404.

In the present embodiment, step S404 may specifically include: the intelligent load balancer performs load balancing according to the reconfigured load balancing policy (a system expected action); the information processing and policy calculation unit acquires and filters valid relevant information from the database; if it is assumed that the expected behavior of the system is based on the bandwidth load of a node where the service instance is located (i.e. preferentially selecting a service instance with a higher real-time bandwidth of the node to forward the request, in this way, the service response speed may be improved), then in this step, the information processing and policy calculating unit may filter out, from the full information and on the basis of the service instance information, the corresponding information between service provider instance and the node, and the real-time bandwidth statistics information of the node. Then, the policy generation unit generates an available service instance pool (including one or more alternative service instances) according to the filtered information, and returns the service instance pool to the API gateway.

In the present embodiment, step S405 may specifically include: returning an actual service request to the API gateway; in the process of forwarding the request to the service provider, reimplementing the traditional and simple load balancing policy (the configured load balancing policy) in the available service instance pool; selecting a specific target service provider instance to send a request; and after the service provider has responded to the request, returning a request response to the client.

Specifically, the configured load balancing policy comprises: a polling policy, a weighted polling policy, a random policy, a hash policy, a minimum response time policy and a minimum concurrent number policy.

In the present embodiment, by means of the load balancing method in steps S401 to S405, the functional richness and intelligence of the cloud native API gateway in the microservice architecture can be enhanced, the load balancing policy of the gateway is enhanced, and the difficulties such as energy saving, consumption reduction and operation and maintenance of a large-scale complex system are solved.

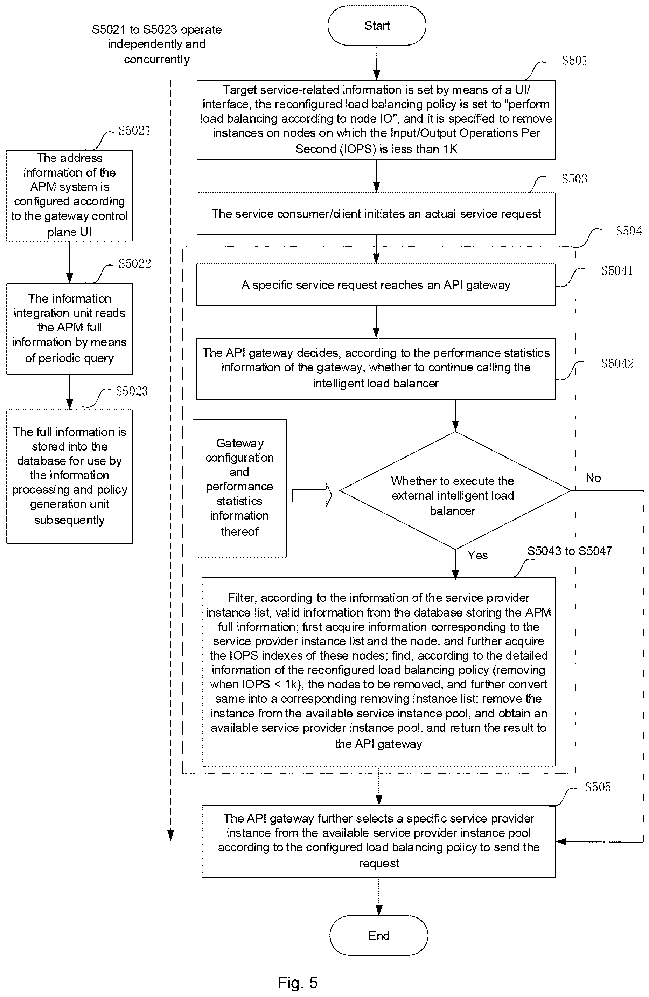

Fig. 5 is a flowchart of a load balancing processing method according to node IO in an embodiment of the present disclosure. The method is applied to a deployment network management system based on a PaaS platform. Due to the shortage of resources in the on-site environment, control nodes and computing nodes are deployed together. A large number of service applications and platform applications are deployed on these nodes, and resource grabbing (such as disk IO) often occurs, and an access to a certain microservice often encounters lags or even failures. When encountering these problems, the service provider finds through location that the problem only occurs in one of the nodes, and the service provider instances on other nodes work normally. Therefore, the user's expected behavior is to adjust the load balancing policy on the basis of the node IO.

As shown in Fig. 5, the load balancing processing method specifically comprises the following steps:
step S501: target service-related information is set by means of a Ul/interface, the reconfigured load balancing policy is set to "perform load balancing according to node IO", and it is specified to remove instances on nodes on which the Input/Output Operations Per Second (IOPS) is less than 1K;
step S502: the intelligent load balancer acquires various items of information by connecting to an APM by means of a standard protocol;
step S503: the service consumer/client initiates an actual service request;
step S504: the API gateway dynamically calls an intelligent load balancer, and the intelligent load balancer filters effective information according to a system expected behavior (an abstract load balancing policy) and calculates a specific load balancing policy; and
step S505: the API gateway further selects a specific service provider instance from the available service provider instance pool according to the configured load balancing policy (the traditional load balancing policy) to send the request.

In the present embodiment, step S501 may specifically include the following steps:
step S5011: the address information (corresponding to the plurality of service provider instances) of the target service provider is filled in by means of the gateway control plane Ul;
step S5012: the reconfigured load balancing policy is set as "performing load balancing according to the node IO"; and
step S5013: in the sub-menu, the load balancing policy relevant index is set as "removing when "IOPS<1k".

In the present embodiment, step S502 may specifically include the following steps:
step S5021: the address information of the APM system is configured according to the gateway control plane UI, or the operation and maintenance personnel configure the address information of the third-party APM system by means of the gateway control plane UI;
step S5022: the information integration unit reads the APM service information in a standard protocol (HTTP) by means of periodic query (for example, one query per 10 seconds), and calls an APM standard interface (i.e. an interface complying with the standard specification OpenTelemetry in the field of APM) to acquire all the operation and maintenance information,
specifically, in step S5022, the integration unit may select different manners, such as periodic acquisition, dynamic monitoring of changes and publishing/subscription to acquire the full information according to the actual application scenario; and
step S5023: the information integration unit stores the acquired full information into the database for use by the information processing and policy generation unit of the intelligent load balancer which may be called subsequently. The information collected by the APM system includes an event, a performance, an index, a call chain and other dimensions, such as CPU, IO and memory occupation information, as well as information (a processing duration, an error rate, and the number of restarts) that can reflect the reflect service processing capability.

In the present embodiment, step S504 may specifically include the following steps:
step S5041: a specific service request reaches an API gateway;
step S5042: the API gateway decides, according to the performance statistics information of the gateway, whether to continue calling the intelligent load balancer; for example, when the memory occupancy rate of the gateway itself is found to be too high (> 90%), the intelligent load balancer is not loaded any more, and the process jumps to step S505 to use the traditional load balancing policy, if none of the indexes of the API gateway exceeds a standard, the intelligent load balancer is loaded, and the process jumps to step S5043 to continue the processing;
step S5043: the intelligent load balancer filters, according to the information of the service provider instance list, valid information from the database storing the APM full information, and first acquires information corresponding to the service provider instance list and the node;
step S5044: the intelligent load balancer continues to acquire, according to the reconfigured load balancing policy, the node information from the database storing the APM full information, filters out the operation and maintenance information of the related nodes, and further acquires the IOPS indexes of these nodes;
step S5045: the intelligent load balancer finds, according to the detailed information of the reconfigured load balancing policy (removing when IOPS < 1k), the nodes to be removed, and further converts same into a corresponding removing instance list; for example, there are service provider instances A\B\C, wherein the IOPS of the node where C is located is 0.5K, and therefore the removing instance list includes C;
step S5046: the intelligent load balancer places all the service provider instances into the service provider instance pool, and according to a result returned in step S5045, removes the instance C from the available service instance pool (which may also perform forward selection), and generates an available service provider instance pool (A\B); and
step S5047: an output result of step S5046 is returned to the API gateway.

In the present embodiment, step S505 may specifically include the following steps:
step S5051: the API gateway continues service request forwarding processing, selects a specific target service provider instance from the available service instance pool, and forwards the request to the instance for processing; and
step S5052: the selected target service provider instance completes processing after receiving the service request, and sends a response to the API gateway, and the gateway returns the response to the client (the service request initiator).

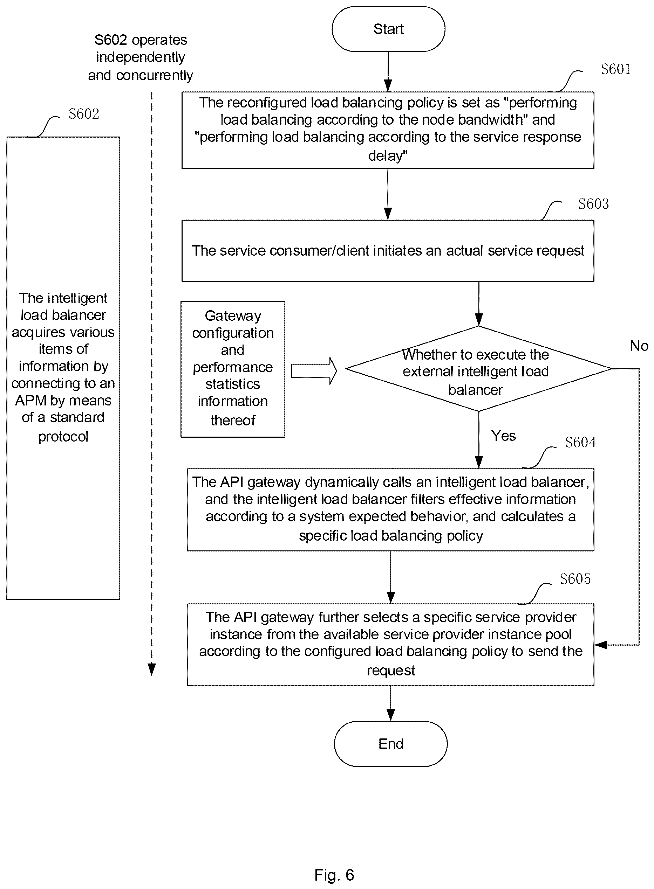

Fig. 6 is a flowchart of a load balancing processing method according to another embodiment of the present disclosure, and provides a flowchart of a load balancing processing method according to a node bandwidth and a service response delay. The method is applied to a scenario in which a service response speed is taken as a first consideration, and resources are relatively sufficient. Therefore, a service provider instance with the minimum average delay of historical processing requests and the maximum bandwidth of a current node is preferentially selected as a first selection when load balancing is performed, so as to ensure that the service can respond at the fastest speed.

As shown in Fig. 6, the load balancing processing method in the present embodiment specifically comprises the following steps:
step S601: the reconfigured load balancing policy is set as "performing load balancing according to the node bandwidth" and "performing load balancing according to the service response delay";
step S602: the intelligent load balancer acquires various items of information by connecting to an APM by means of a standard protocol;
step S603: the service consumer/client initiates an actual service request;
step S604: the API gateway dynamically calls an intelligent load balancer, and the intelligent load balancer filters effective information according to a system expected behavior (an abstract load balancing policy) and calculates a specific load balancing policy; and
step S605: the API gateway further selects a specific service provider instance from the available service provider instance pool according to the configured load balancing policy (the traditional load balancing policy) to send the request.

In the present embodiment, step S601 may specifically include the following steps:
step S6011: the address information of the target service is filled in by means of the gateway control plane Ul;
step S6012: a first load balancing policy is set as "performing load balancing according to the node bandwidth";
step S6013: in the sub-menu, the policy related to the load balancing policy is set as "a node with the maximum bandwidth";
step S6014: a second load balancing policy is set as "performing load balancing according to the service response delay";
step S6015: in the sub-menu, the policy related to the load balancing policy is set as "a service instance with minimum time delay"; and
step S6016: the reconfigured load balancing policy is set as a combination policy of two policy relationships in step S6012 and step S6014, and the combination relationship is "AND",
specifically, by means of step S601 to step S606, the richness of load balancing can be greatly improved, and the diversity of demands can be satisfied; by selecting a plurality of load balancing policies and a combination relationship, more load balancing policies can be combined, and the manner of combination is also diverse (including AND, OR, NOT, regular, etc.);
step S6021: the address information of the APM system is configured according to the gateway control plane UI, or the operation and maintenance personnel configure the address information of the third-party APM system by means of the gateway control plane UI; and
step S6022, the information integration unit of the intelligent load balancer reads the APM service information in a standard protocol (HTTP) by means of periodic query (for example, one query per minute), and calls an APM standard interface (i.e. an interface complying with the standard specification OpenTelemetry in the field of APM) to acquire all the operation and maintenance information,
specifically, in the query in step S6022, the information integration unit of the intelligent load balancer may select different manners, such as periodic acquisition, dynamic monitoring of changes and publishing/subscription to acquire the full information according to the actual application scenario; and
step S6023: the intelligent load balancer-information integration unit stores the APM full information into the database for use by the information processing and policy generation unit of the intelligent load balancer which may be called subsequently,
specifically, the service operation information collected in step S6023 includes an event, a performance, an index, a call chain and other dimensions, such as CPU, IO and memory occupation information, as well as information (a processing duration, an error rate, and the number of restarts) that can reflect the reflect service processing capability.

In the present embodiment, step S604 may specifically include the following steps:
step S6041: a specific service request reaches an API gateway;
step S6042: the API gateway decides, according to the performance statistics information of the gateway, whether to call the intelligent load balancer,
specifically, the API gateway periodically collects its own performance statistics information, such as a CPU occupancy rate, during daily running; and if it is found that the CPU occupancy rate of the gateway itself is too high (>80%) when a service request is received, the intelligent load balancer is not loaded any more, and the process jumps to step S605 to use the traditional load balancing policy (the configured load balancing policy), if the CPU occupancy rate of the API gateway does not exceed the standard, the intelligent load balancer is loaded, and the process jumps to step S6043 to continue the processing;
step S6043: the service request processing flow jumps to an execution stage of the intelligent load balancer, and the information processing and policy calculation unit of the intelligent load balancer acquires, according to the service request, the information related to the target service from the database stored in step S602; since the expected load balancing policy is "performing load balancing according to the node bandwidth and performing load balancing according to the service response delay", steps S6044 to S6047 are executed to acquire related information and calculate the policy;
step S6044: the information processing and policy calculation unit of the intelligent load balancer filters out related node operation and maintenance information according to the acquired information of the node where the service provider instance is located, and further acquires real-time bandwidth index information of these nodes and the processing delay information of each service instance for the request;
step S6045: the information processing and policy calculation unit finds a node with the optimal bandwidth according to the load balancing policy information (selecting a node with the maximum bandwidth), and further converts the node with the optimal bandwidth into a corresponding service provider instance list (service provider sub-instance pool), for example, there are service provider instances A\B\C\D\E, wherein the bandwidth of the node where A\B\C is located is optimal, then A\B\C are selected;
step S6046: the information processing and policy calculation unit finds an instance list (a service provider sub-instance pool) with the minimum service processing delay according to the details information of the load balancing policy (a service instance with the "minimum" delay), for example, there are service provider instance A\B\C\D\E, wherein the processing delay of B\C\E is the minimum, then B\C\E are selected;
step S6047: the intelligent load balancer takes an intersection of the two instance lists in steps S6045 and S6046 according to the detailed information of the load balancing policy (the combination relationship between the two policies is AND), i.e. the service provider instances B\C are an available service provider instance pool; and
step S6048: an output result of step S6047 is returned to the API gateway.

In the present embodiment, step S605 may specifically include the following steps:
step S6051: the API gateway continues to perform request forwarding processing, selects the target service provider instance from the service provider instance pool according to the configured load balancing policy (the traditional load balancing policy), and forwards the service request to the target service provider instance for processing; and
step S6052: the selected target service provider instance completes processing after receiving the service request, and sends a response to the API gateway, and the gateway returns the response to the client (the service consumer).

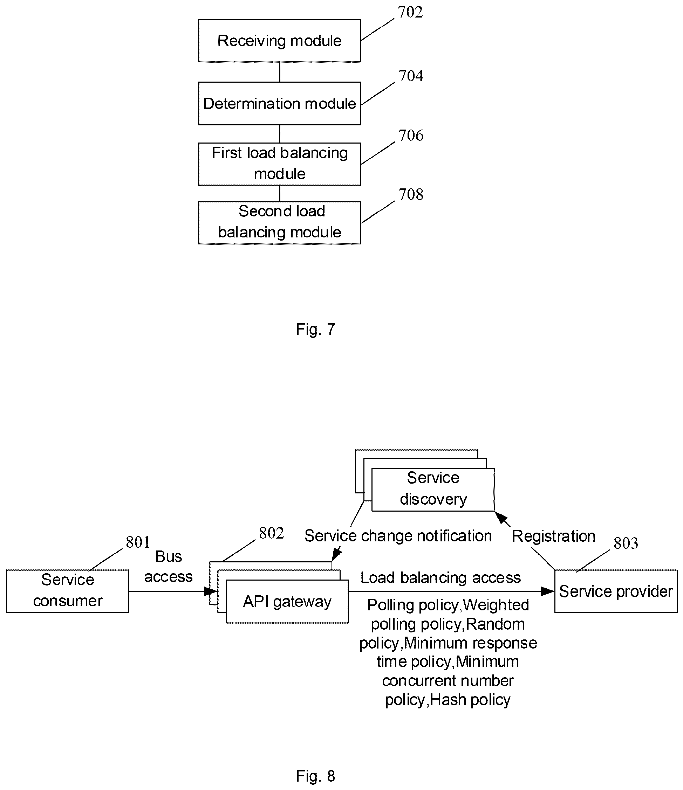

According to another aspect of the embodiments of the present disclosure, a load balancing processing apparatus is further provided. Fig. 7 is a block diagram of a load balancing processing apparatus according to an embodiment of the present disclosure. As shown in Fig. 7, the load balancing processing apparatus comprises:
a receiving module 702, configured to receive a service request from a service consumer;
a determination module 704, configured to acquire performance statistics information of an application programming interface (API) gateway, and determine, according to the performance statistics information, whether the API gateway satisfies a load condition of a reconfigured load balancing policy;
a first load balancing module 706, configured to determine a target service provider instance according to pre-stored application performance management (APM) full information and the reconfigured load balancing policy in cases where the API gateway satisfies the loading condition, the target service provider instance being used for processing the service request; and
a second load balancing module 708, configured to determine the target service provider instance according to a configured load balancing policy in cases where the API gateway does not satisfy the loading condition.

In the present embodiment, the determination module 704 is configured to determine whether the performance statistics information is less than a preset performance statistics information threshold, wherein the performance statistics information comprises at least one of the following: a gateway forwarding error rate, a gateway CPU occupancy rate and a gateway memory occupancy rate; in cases where the performance statistics information is less than the performance statistics information threshold, determine that the API gateway satisfies the loading condition; and in cases where the performance statistics information is greater than or equal to the performance statistics information threshold, determine that the API gateway does not satisfy the loading condition.

In the present embodiment, the first load balancing module 706 includes:
a first determination unit, configured to determine one or more service providers according to the service request, wherein each service provider is configured with at least one service provider instance;
a filtering unit, configured to filter out, from the APM full information, target service operation information corresponding to the reconfigured load balancing policy and the service provider;
a generation unit, configured to generate a service provider instance pool according to the reconfigured load balancing policy and the target service operation information; and
a first load balancing unit, configured to determine the target service provider instance from the service provider instance pool according to the configured load balancing policy.

In the present embodiment, the generating unit is further configured to screen, in cases where one reconfigured load balancing policy is preset and according to the target service operation information, all service provider instances that satisfy the reconfigured load balancing policy to form the service provider instance pool; respectively screen, in cases where a plurality of reconfigured load balancing policies are preset and according to the target service operation information, all service provider instances satisfying each reconfigured load balancing policy to form a service provider sub-instance pool; and process a plurality of service provider sub-instance pools according to a preset combination relationship to obtain the service provider instance pool, wherein the combination relationship comprises one of the following: AND, OR and NOT.

In the present embodiment, the load balancing processing apparatus further comprises:
an integration module, configured to acquire and store the APM full information from an APM system by means of an interface complying with a OpenTelemetry specification, wherein the APM full information comprises operation information of all service provider instances collected and counted by the APM system; and
a service processing module, configured to forward the service request to the target service provider instance after determining the target service provider instance; and return a service request response to the service consumer after the target service provider instance responds to the service request.

In the present embodiment, the second load balancing module 708 includes:
a first determination unit, configured to determine one or more service providers according to the service request, wherein each service provider is configured with at least one service provider instance;
an acquisition unit, configured to acquire service operation information that is collected by the API gateway and corresponds to the service provider instance; and
a second load balancing unit, configured to determine the target service provider instance according to the service operation information and the configured load balancing policy, wherein the configured load balancing policy comprises a polling policy, a weighted polling policy, a random policy, a hash policy, a minimum response time policy and a minimum concurrent number policy.

According to another embodiment of the present disclosure, also provided is a method for dynamically combining an API gateway load balancing policy with an APM system. The APM system is coupled and connected to a pluggable intelligent load balancer; when the performance of the API gateway is poor, the coupling between the API gateway and the intelligent load balancer is disconnected, and load balancing is independently performed by the API gateway; when the performance of the API gateway is good, the API gateway is coupled to the intelligent load balancer, and the API gateway and the intelligent load balancer perform load balancing together.

Fig. 8 is a structural block diagram of performing load balancing independently by an API gateway according to an embodiment of the present disclosure.

As shown in Fig. 8, when the API gateway performs load balancing independently, the service consumer 801 directly sends a service request to the API gateway 802, the API gateway 802 can acquire addresses of all service instances by means of service discovery, and the API gateway 802 executes the configured load balancing policy (the traditional load balancing policy) in the process of forwarding the service request to the service provider 803, wherein the configured load balancing policy comprises a polling policy, a weighted polling policy, a random policy, a hash policy, a minimum response time policy and a minimum concurrent number policy.

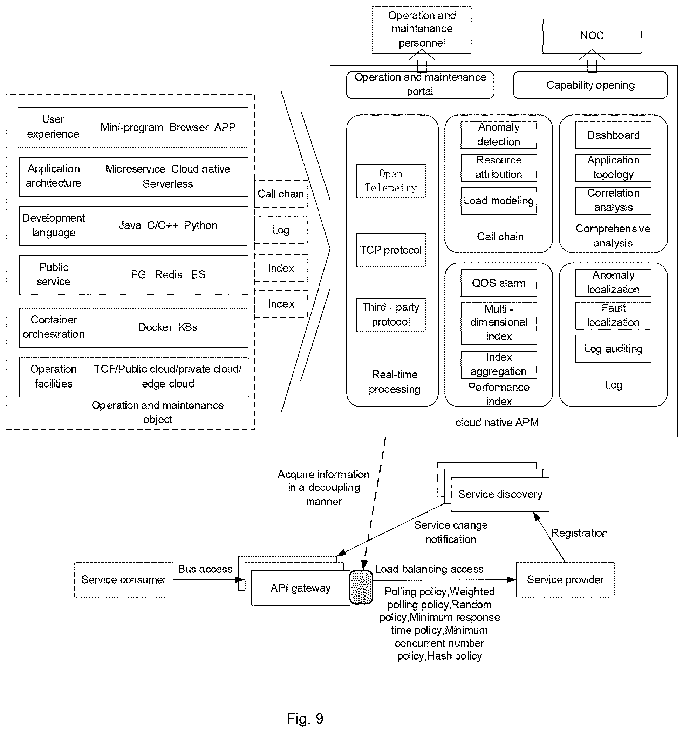

Fig. 9 is a structural block diagram of performing load balancing by an API gateway and an intelligent load balancer together according to an embodiment of the present disclosure. As shown in Fig. 9, the API gateway acquires information from the APM system in a decoupling manner.

In the present embodiment, the API gateway is coupled to the intelligent load balancer, and the intelligent load balancer can acquire, from a cloud native APM system, operation and maintenance data of all applications or resource pools connected to the APM system. The dimensions of the operation and maintenance data include call chains, logs, metrics, events, etc.

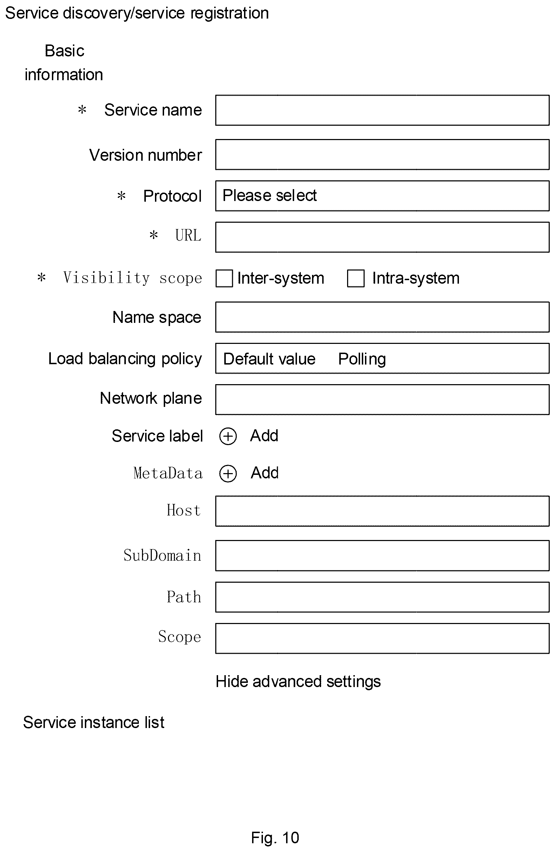

Fig. 10 is a schematic diagram of a gateway control plane UI according to an embodiment of the present disclosure. As shown in Fig. 10, a user may perform service registration for each service on an API gateway control interface.

In the present embodiment, a load balancing policy is used that can be set for a service provider by means of a gateway control plane UI. On the basis of the configured load balancing policy (polling, weight, hash, random, etc.), a new load balancing policy for reconfiguration is added. After each load balancing policy is selected, a sub-menu pops up, and relevant index values are set in the sub-menu. For example, a specific bit/s may be set in a sub-menu of node bandwidth load, and a service-defined service index item may be filled in a sub-menu of the service index capability of the service instance; when the relevant index of the node of a certain service instance or the service itself is lower than a set threshold, the service instance will then be removed from an available load balancing service instance pool.

The embodiments of the present disclosure further provide a computer readable storage medium storing a computer program, wherein the computer program is configured to execute, when being run by a processor, the steps in any one of the described method embodiments.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present disclosure further provide an electronic device, including a memory and a processor; the memory stores a computer program, and the processor is configured to run the computer program, so as to execute the operations in any one of the method embodiments.

In an exemplary embodiment, the electronic device can further comprise a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present disclosure can be implemented by using a general computing device, and they can be integrated in a single computing device, and can also be distributed over a network consisting of a plurality of computing devices. In an exemplary embodiment, they may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the embodiments of the present disclosure are not limited to any specific hardware and software combinations.

The content above only relates to preferred embodiments of the present disclosure, and is not intended to limit the present disclosure. For a person skilled in the art, the embodiments of the present disclosure may have various modifications and changes. Any modifications, equivalent replacements, improvements, etc. made within the principle of the embodiments of the present disclosure shall all fall within the scope of protection of the present disclosure.

## Claims

1. A load balancing processing method, the method comprising:
receiving a service request from a service consumer;
acquiring performance statistics information of an application programming interface ,API, gateway, and determining, according to the performance statistics information, whether the API gateway satisfies a loading condition of a reconfigured load balancing policy;
determining a target service provider instance according to pre-stored application performance management ,APM, full information and the reconfigured load balancing policy in cases where the API gateway satisfies the loading condition, the target service provider instance being used for processing the service request; and
determining the target service provider instance according to a configured load balancing policy in cases where the API gateway does not satisfy the loading condition.

2. The method according to claim 1, wherein determining a target service provider instance according to pre-stored APM full information and the reconfigured load balancing policy in cases where the API gateway satisfies the loading condition comprises:
determining one or more service providers according to the service request, wherein each service provider is configured with at least one service provider instance;
filtering out, from the APM full information, target service operation information corresponding to the reconfigured load balancing policy and the service provider;
generating a service provider instance pool according to the reconfigured load balancing policy and the target service operation information; and
determining the target service provider instance from the service provider instance pool according to the configured load balancing policy.

3. The method according to claim 2, wherein generating a service provider instance pool according to the reconfigured load balancing policy and the target service operation information comprises:
in cases where one reconfigured load balancing policy is preset, screening, according to the target service operation information, all service provider instances that satisfy the reconfigured load balancing policy to form the service provider instance pool; and
in cases where a plurality of reconfigured load balancing policies are preset, respectively screening, according to the target service operation information, all service provider instances satisfying each reconfigured load balancing policy to form a service provider sub-instance pool;
and processing a plurality of service provider sub-instance pools according to a preset combination relationship to obtain the service provider instance pool, wherein the combination relationship comprises one of the following: AND, OR and NOT.

4. The method according to claim 1, wherein the method further comprises:
acquiring and storing the APM full information from an APM system by means of an interface complying with a preset specification, wherein the APM full information comprises operation information of all service provider instances collected and counted by the APM system.

5. The method according to claim 1, wherein the method further comprises:
forwarding the service request to the target service provider instance after determining the target service provider instance; and
returning a service request response to the service consumer after the target service provider instance responds to the service request.

6. The method according to claim 1, wherein the reconfigured load balancing policy is set according to the operation information collected and counted by the APM system, and the dimensions of the operation information comprise an event, a performance, an index, and a call chain.

7. The method according to claim 6, wherein the reconfigured load balancing policy comprises:
performing load balancing according to the number of application restarts of the service provider instance;
performing load balancing according to an application restart duration of the service provider instance;
performing load balancing according to the number of applications for restart of a node where the service provider instance is located;
performing load balancing according to the input and output ,IO, of a node where the service provider instance is located;
performing load balancing according to the real-time bandwidth of the service provider instance;
performing load balancing according to a historical error rate of the service provider instance;
performing load balancing according to the service index capability of the service provider instance;
performing load balancing according to a processing duration of a single request of a service provider instance;
performing load balancing according to processing success rates of a plurality of requests of the service provider instance;
performing load balancing according to a CPU occupancy rate of a central processing unit of the service provider instance; and
performing load balancing according to a response time of the service provider instance.

8. The method according to claim 1, wherein determining the target service provider instance according to a configured load balancing policy comprises:
determining one or more service providers according to the service request, wherein each service provider is configured with at least one service provider instance;
acquiring service operation information that is collected by the API gateway and corresponds to the service provider instance; and
determining the target service provider instance according to the service operation information and the configured load balancing policy, wherein the configured load balancing policy comprises a polling policy, a weighted polling policy, a random policy, a hash policy, a minimum response time policy and a minimum concurrent number policy.

9. The method according to claim 1, wherein determining, according to the performance statistics information, whether the API gateway satisfies the loading condition of the reconfigured load balancing policy comprises:
determining whether the performance statistics information is less than a preset performance statistics information threshold, wherein the performance statistics information comprises at least one of the following: a gateway forwarding error rate, a gateway CPU occupancy rate and a gateway memory occupancy rate;
in cases where the performance statistics information is less than the performance statistics information threshold, determining that the API gateway satisfies the loading condition; and
in cases where the performance statistics information is greater than or equal to the performance statistics information threshold, determining that the API gateway does not satisfy the loading condition.

10. A load balancing processing apparatus, comprising:
a receiving module, configured to receive a service request from a service consumer;
a determination module, configured to acquire performance statistics information of an application programming interface ,API, gateway, and determine, according to the performance statistics information, whether the API gateway satisfies a load condition of a reconfigured load balancing policy;
a first load balancing module, configured to determine a target service provider instance according to pre-stored application performance management ,APM, full information and the reconfigured load balancing policy in cases where the API gateway satisfies the loading condition, the target service provider instance being used for processing the service request; and
a second load balancing module, configured to determine the target service provider instance according to a configured load balancing policy in cases where the API gateway does not satisfy the loading condition.

11. A load balancing processing system, the system comprising:
an API gateway, configured to receive a service request from a service consumer, acquire performance statistics information of an application programming interface ,API, gateway, and determine, according to the performance statistics information, whether the API gateway satisfies a load condition of a reconfigured load balancing policy;
an intelligent load balancer, configured to determine a target service provider instance according to pre-stored application performance management ,APM, full information and the reconfigured load balancing policy in cases where the API gateway satisfies the loading condition, the target service provider instance being used for processing the service request; and
the API gateway, further configured to determine the target service provider instance according to a configured load balancing policy in cases where the API gateway does not satisfy the loading condition.

12. A computer readable storage medium storing a computer program, wherein the computer program is configured to execute, when being run by the processor, the method according to any one of claims 1 to 9.

13. An electronic device, comprising a memory and a processor, wherein the memory stores a computer program, and the processor is configured to run the computer program so as to execute the method according to any one of claims 1 to 9.
